# FASCICULE DE BREVET EUROPEEN

(11) **EP 2 440 367 B1**
(45) Date de publication et mention de la délivrance du brevet: **25.12.2013**
(21) Numéro de dépôt: 10724752.0
(22) Date de dépôt: 03.06.2010
(51) Int. Cl.: B23P 6/00, F01D 5/18, F23R 3/00

(54) **PROCEDE DE REDUCTION DE DIAMETRE D'UN ORIFICE**
VERFAHREN ZUR DURCHMESSERVERRINGERUNG EINER ÖFFNUNG
METHOD FOR REDUCING THE DIAMETER OF AN OPENING

(30) Priorité: 12.06.2009 FR 0953950
(43) Date de publication de la demande: 18.04.2012
(73) Titulaire: Snecma, 75015 Paris (FR)
(72) Inventeur: DURET, Jean-Michel, Serge, Marcel, F-91070 Bondoufle (FR)
(74) Mandataire: David, Daniel
(86) Numéro de dépôt international: PCT/EP2010/057787
(87) Numéro de publication internationale: WO 2010/142599

(56) Documents cités:
- EP-A1- 1 655 093
- EP-A2- 1 174 587
- US-A1- 2008 083 117

## Description

La présente invention se rapporte à un procédé de réduction de diamètre d'un orifice, dont le pourtour est en alliage réfractaire.

Un tel procédé est connu du document EP 1174587.

Le perçage d'orifices, en particulier par usinage, présente des problèmes de tolérance particuliers. Alors qu'un diamètre insuffisant peut être corrigé en ré-usinant la pièce, il n'est pas possible de récupérer du matériau perdu lorsque l'orifice atteint un diamètre excessif. Pour cette raison, de telles pièces sont normalement irrécupérables et vont au rebut, avec un coût conséquent.

Un premier objet de la présente demande est donc de fournir un procédé de réduction de diamètre d'un orifice, permettant de récupérer des pièces dans lesquelles le diamètre d'au moins un orifice dépasse les tolérances requises.

Le procédé de l'invention comporte une étape de matage d'un pourtour de l'orifice. En matant un pourtour de l'orifice, une partie du matériau du pourtour est repoussée vers l'intérieur de l'orifice, réduisant le diamètre de ce dernier.

Avantageusement, ledit matage peut être effectué avec un outil centré sur l'orifice. De cette manière il est possible d'obtenir une réduction de diamètre régulière sur tout le périmètre de l'orifice, maintenant ainsi la forme initiale de l'orifice.

Avantageusement, une extrémité de contact dudit outil peut comporter une bille sensiblement sphérique. L'utilisation d'une telle bille pour le matage permet une réduction sensible du diamètre de l'orifice avec un impact minimal sur la surface venant en contact avec la bille le long du pourtour de l'orifice.

L'extrémité de contact dudit outil peut toutefois présenter d'autres formes, telles que, par exemple, une forme sensiblement tronconique.

Selon l'invention ledit pourtour de l'orifice est métallique. Un matériau métallique présente une certaine malléabilité permettant, dans certaines limites, la déformation plastique du pourtour de l'orifice.

Plus particulièrement, ledit pourtour de l'orifice est en alliage réfractaire, tel que, par exemple un alliage à base de nickel, comme l'Inconel® 718 ou l'Hastelloy ® X, un alliage à base de cobalt, comme le MAR M 509, ou un alliage à base de nickel-fer. Des tels alliages réfractaires présentent un coût élevé et des difficultés d'usinage. Le taux normal de rebut est donc élevé, tout comme les coûts en résultant. L'application du procédé de l'invention à des pièces en alliage réfractaire ne devient donc que plus intéressante.

Le problème des faibles tolérances de variation du diamètre des orifices se présente particulièrement dans le cas de pièces comportant une pluralité d'orifices de faible diamètre pour le passage d'un fluide gazeux. Des telles pièces sont normalement tenues de présenter une perméabilité prédéterminée audit fluide gazeux. Tandis qu'une perméabilité trop réduite peut être corrigée en élargissant les orifices de passage du gaz, une perméabilité trop élevée n'est pas facilement corrigeable et entraîne normalement le rebut des pièces.

Un deuxième objet de la présente demande est donc de fournir un procédé de correction de la perméabilité d'une pièce comportant une pluralité d'orifices de passage de fluide gazeux.

Un procédé de correction de perméabilité suivant l'invention comporte les étapes d'identification d'au moins un orifice dont un diamètre excède une limite supérieure prédéterminée, et de réduction dé ce diamètre par le procédé de réduction de diamètre susmentionné.

Avantageusement, ledit procédé de correction peut en outre comporter une étape préalable de contrôle de la perméabilité de la pièce. Ainsi, la perméabilité n'est corrigée qu'au delà d'un seuil maximum prédéterminé.

Lesdits orifices peuvent être des orifices de refroidissement. Des tels orifices présentent généralement des diamètres réduits, mais présentant aussi des tolérances de fabrication limitées. En outre, afin de maintenir un certain profil de température sur la pièce, ils sont distribués sur celle-ci avec des contraintes de position très strictes. Il n'est donc normalement pas possible de corriger une perméabilité excessive d'une telle pièce en rebouchant simplement certains des trous de refroidissement.

Un autre objet de la présente invention est de limiter le rebut et les coûts de production de turbines à gaz, incluant turboréacteurs, turbopropulseurs, turbomoteurs, etc. Ladite pièce peut être une pièce de section chaude et/ou de chambre de combustion, par exemple un bol de chambre de combustion ou un fond de chambre de combustion.

Des détails concernant l'invention sont décrits ci-après faisant référence aux dessins.
La figure 1 montre une vue schématique d'un orifice avant d'y appliquer un procédé de réduction de diamètre suivant un mode de réalisation de l'invention ;
la figure 2 montre une vue schématique de l'étape de matage du pourtour de l'orifice de la figure 1 dans le procédé de réduction de diamètre suivant un mode de réalisation de l'invention ;
la figure 3 montre une vue schématique de l'orifice de la figure 1 après y avoir appliqué le procédé de réduction de diamètre suivant un mode de réalisation de l'invention ;
la figure 4 montre une vue d'un outil de matage pour le procédé de réduction de diamètre suivant un mode de réalisation de l'invention ;
la figure 5 montre une vue d'un outil de matage alternatif pour le procédé de réduction de diamètre suivant un mode de réalisation de l'invention, et
la figure 6 montre une vue en coupe d'une chambre de combustion de turbine à gaz présentant deux orifices de refroidissement pouvant être traités par le procédé de réduction de diamètre suivant un mode de réalisation de l'invention.

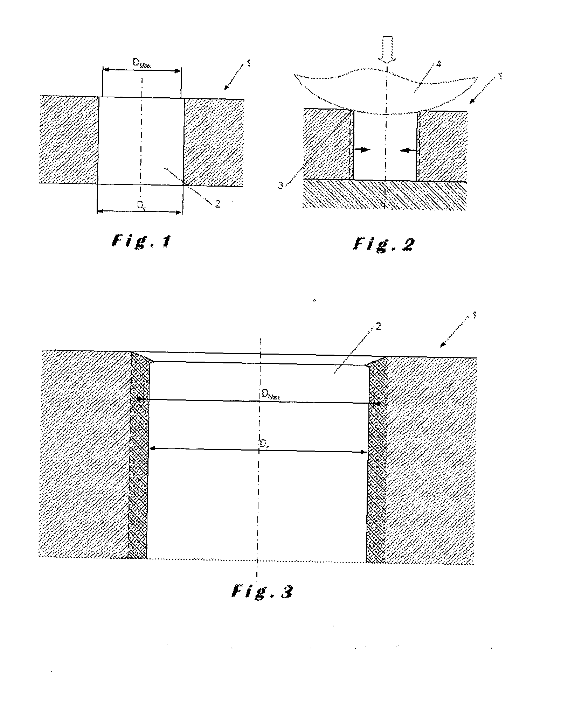

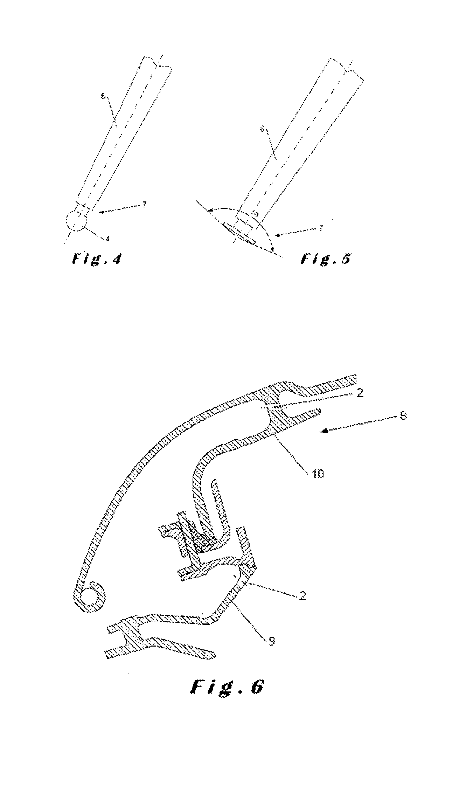

Dans la figure 1, une paroi 1 illustrée présente un orifice 2 dont le diamètre réel Dr est supérieur, jusqu'à 10%, à un diamètre maximum désiré Dₘₐₓ. Dans un mode de réalisation, illustré sur la figure 2, du procédé de réduction de diamètre suivant l'invention, le pourtour 3 de l'orifice 2 est maté avec un outil 6 comportant, sur une extrémité de contact 7, une bille 4 au diamètre sensiblement supérieur, par exemple entre 5 et 10 fois supérieur, au diamètre Dᵣ de l'orifice 1. Cet outil 6 est illustré sur la figure 4. Pendant le matage illustré sur la figure 2, la bille 4 est centrée sur l'axe de l'orifice 2. Pour éviter une déformation en flexion de la paroi 1, celle-ci est appuyée sur un support. Ainsi, la pression de la bille 4 provoque une déformation plastique du pourtour 3 d'entrée de l'orifice 2 faisant fluer le matériau vers l'intérieur de l'orifice 2. Il se forme ainsi un bourrelet vers l'intérieur. Quand le matage est terminé, comme illustré sur la figure 3, le diamètre de l'orifice 2 au niveau de son pourtour d'entrée a diminué et se retrouve en dessous du diamètre maximum désiré Dₘₐₓ. En même temps, les qualités mécaniques et thermiques de la paroi 1 sont faiblement affectées, de telle manière qu'il est possible d'utiliser la paroi 1 de la manière pour laquelle elle est conçue.

Bien que dans l'étape de matage illustrée sur la figure 2 l'outil de matage 6 soit terminé par une bille 4 sphérique ou sensiblement sphérique, d'autres formes peuvent être utilisées. Par exemple, l'outil 6 pourrait être terminé par une extrémité de contact 7 tronconique, comme illustré sur la figure 5. De préférence, l'angle de conicité α serait supérieur à 120°. Plus particulièrement, il serait supérieur à 150°.

Bien que dans le mode de réalisation illustré, l'outil 6 soit aligné avec l'axe de l'orifice 2, le procédé de l'invention peut être aussi appliqué sur des orifices présentant un angle avec la pression de matage. Cet angle peut être, par exemple, de 30°, ou moins de 30°, de préférence moins de 20°.

Le procédé de l'invention est particulièrement utile pour corriger un excès de perméabilité sur des pièces présentant des orifices pour le refroidissement par passage d'un fluide gazeux, tel que l'air. En particulier, le procédé de l'invention peut être utile pour corriger un excès de perméabilité sur des pièces de section chaude d'une turbine de gaz, comme par exemple un bol, un film ou un fond de chambre de combustion. La figure 6 illustre un détail d'une chambre de combustion 8 dans une telle section chaude de turbine de gaz. Cette chambre de combustion 8 comporte un bol 9 et un film 10, présentant des orifices 2 de refroidissement. De telles pièces de section chaude de turbine de gaz sont généralement produites en alliage réfractaire, tel que l'Inconel® 718, l'Hastelloy® X, ou le MAR M 509. Les orifices 2 sont percés par des techniques d'usinage connues, tel que l'usinage laser. Il est donc normalement difficile de corriger une perméabilité excessive après usinage. Le procédé de l'invention peut être mis en oeuvre pour corriger un excès de perméabilité de ces pièces en réduisant le diamètre de certains de ses orifices 2 de refroidissement.

Pour cela, dans une première étape, la perméabilité de la pièce 8 ou 9 est contrôlée. Si elle dépasse un seuil maximum, les orifices 2 sont mesurés individuellement pour identifier lesquels dépassent un diamètre maximum Dₘₐₓ. Ensuite, ces derniers orifices 2 sont traités suivant le procédé de réduction de diamètre décrit ci-dessus, afin de réduire la perméabilité de la pièce et rentrer dans l'intervalle de tolérance.

Les alliages réfractaires utilisés dans de telles pièces présentent aussi une dureté élevée. Des forces de matage élevées seront donc normalement requises. La table 1, ci-dessous, reproduit des exemples de matage de tels orifices dans des parois d'alliage réfractaire :

**Table 1 : Exemples de matage**

| **Ø Avant** | **Ø Après** | **Reduction** | **Force [Kp]** |
|---|---|---|---|
| 0,9 | 0,83 | 0,07 | 500 |
| 0,9 | 0,82 | 0,08 | 300 |
| 0,9 | 0,86 | 0,04 | 200 |
| 1,14 | 1,04 | 0,1 | 500 |
| 1,13 | 1,03 | 0,1 | 450 |
| 1,15 | 1,07 | 0,08 | 400 |
| 1,14 | 1,09 | 0,05 | 300 |
| 1,14 | 1,11 | 0,03 | 200 |
| 1,12 | 1,09 | 0,03 | 150 |
| 1.2 | 1,13 | 0,07 | 450 |
| 1,19 | 1,1 | 0,09 | 400 |
| 1,2 | 1,15 | 0,05 | 300 |
| 1,18 | 1,12 | 0,06 | 200 |
| 1,19 | 1,18 | 0,01 | 150 |
| 1,39 | 1,26 | 0,13 | 650 |
| 1,41 | 1,31 | 0,1 | 600 |
| 1,42 | 1,35 | 0,07 | 500 |
| 1,42 | 1,38 | 0,04 | 400 |
| 1,43 | 1,39 | 0,04 | 300 |
| 1,43 | 1,4 | 0,03 | 250 |

Grâce au procédé suivant l'invention, il est donc possible de récupérer des pièces qui seraient autrement destinées au rebut.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif.

## Revendications

1. Procédé de réduction de diamètre d'un orifice (2), dont le pourtour est en alliage réfractaire **caractérisé par le fait qu'**il comporte une étape de matage d'un pourtour (3) de l'orifice (2) effectué avec un outil dont l'extrémité de contact est de forme sphérique ou sensiblement sphérique ou tronconique.

2. Procédé suivant la revendication 1, dans lequel ledit matage est effectué avec un outil (6) centré sur l'orifice (2).

3. Procédé suivant la revendication 2, dans lequel une extrémité de contact (7) dudit outil (6) comporte une bille (4).

4. Procédé suivant l'une quelconque des revendications précédentes, dans lequel ledit pourtour (3) de l'orifice (2) est métallique.

5. Procédé suivant l'une quelconque des revendications précédentes, dans lequel le diamètre de l'orifice (2) est compris entre 0,5 et 3 mm.

6. Procédé de correction de la perméabilité d'une pièce (9,10) comportant une pluralité d'orifices (2) de passage de fluide gazeux, **caractérisé par le fait qu'**il comporte les étapes suivantes :
- identification d'au moins un orifice (2) dont un - diamètre (Dᵣ) excède une limite supérieure (Dₘₐₓ) prédéterminée ;
- réduction dudit diamètre excessif (Dr) par un procédé suivant une quelconque des revendications 1 à 5.

7. Procédé suivant la revendication 6, comportant une étape préalable de contrôle de la perméabilité de la pièce (9, 10).

8. Procédé suivant l'une des revendications 6 ou 7, dans lequel lesdits orifices (2) sont des orifices de refroidissement.

9. Procédé suivant l'une quelconque des revendications 6 à 8, dans lequel ladite pièce (9,10) fait partie d'une section chaude de turbine à gaz.

10. Procédé suivant l'une quelconque des revendications 6 à 9, dans lequel ladite pièce (9,10) fait partie d'une chambre de combustion (8).

## Patentansprüche

1. Verfahren zur Verringerung des Durchmessers einer Öffnung (2), deren Umfang aus einer feuerfesten Legierung ist, **dadurch gekennzeichnet, dass** sie einen Schritt des Verstemmens eines Umfangs (3) der Öffnung (2) umfasst, der mit einem Werkzeug ausgeführt wird, dessen Kontaktende kugelförmige oder im Wesentlichen kugelförmige oder kegelstumpfartige Form hat.

2. Verfahren nach Anspruch 1, bei dem das Verstemmen mit einem auf die Öffnung (2) zentrierten Werkzeug (6) ausgeführt wird.

3. Verfahren nach Anspruch 2, bei dem ein Kontaktende (7) des Werkzeugs (6) eine Kugel (4) umfasst.

4. Verfahren nach einem der vorhergehenden Ansprüche, bei dem der Umfang (3) der Öffnung (2) metallisch ist.

5. Verfahren nach einem der vorhergehenden Ansprüche, bei dem der Durchmesser der Öffnung (2) zwischen 0,5 und 3 mm beträgt.

6. Verfahren zur Korrektur der Durchlässigkeit eines Teils (9, 10), umfassend eine Vielzahl von Öffnungen (2) für den Durchgang eines gasförmigen Fluids, **dadurch gekennzeichnet, dass** es die folgenden Schritte umfasst:
- Identifizierung mindestens einer Öffnung (2), deren Durchmesser (Dᵣ) größer als eine vorbestimmte obere Grenze (Dₘₐₓ) ist;
- Verringerung des zu großen Durchmessers (Dᵣ) durch ein Verfahren nach einem der Ansprüche 1 bis 5.

7. Verfahren nach Anspruch 6, umfassend einen vorherigen Schritt der Kontrolle der Durchlässigkeit des Teils (9, 10).

8. Verfahren nach einem der Ansprüche 6 oder 7, bei dem die Öffnungen (2) Kühlöffnungen sind.

9. Verfahren nach einem der Ansprüche 6 bis 8, bei dem der Teil (9, 10) Bestandteil eines Heißabschnitts einer Gasturbine ist.

10. Verfahren nach einem der Ansprüche 6 bis 9, bei dem der Teil (9, 10) Bestandteil einer Brennkammer (8) ist.

## Claims

1. A method for reducing the diameter of an opening (2), the perimeter of which is made of refractory material **characterized in that** it comprises a step of peening the perimeter (3) of the opening (2) by means of a tool, the contact end of which is spherical or approximately spherical or frustoconical.

2. The method as claimed in claim 1, in which said peening is carried out with a tool (6) centered over the opening (2).

3. The method as claimed in claim 2, in which a contact end (7) of said tool (6) comprises a ball (4).

4. The method as claimed in any one of the preceding claims, in which said perimeter (3) of the opening (2) is metallic.

5. The method as claimed in any one of the preceding claims, in which the diameter of the opening (2) is between 0.5 and 3 mm.

6. A method for correcting the permeability of a component (9, 10) comprising a plurality of through-openings (2) for gaseous fluid, **characterized in that** it comprises the following steps of:
- identifying at least one opening (2), the diameter (Dᵣ) of which exceeds a predetermined upper limit (Dₘₐₓ);
- reducing said excessive diameter (Dᵣ) by a method as claimed in any one of claims 1 to 5.

7. The method as claimed in claim 6, comprising a prior step of checking the permeability of the component (9, 10).

8. The method as claimed in either of claims 6 and 7, in which said openings (2) are cooling openings.

9. The method as claimed in any one of claims 6 to 8, in which said component (9, 10) is part of a gas turbine hot section.

10. The method as claimed in any one of claims 6 to 9, in which said component (9, 10) is part of a combustion chamber (8).
